(19) Europäisches Patentamt
European Patent Office
Office européen des brevets

(11) EP 0 973 781 B1

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **98917047.7**

(22) Anmeldetag: **23.03.1998**

(51) Int Cl.$^7$: **C07F 7/12**, C08G 77/56, C04B 35/589

(86) Internationale Anmeldenummer:
**PCT/EP98/01669**

(87) Internationale Veröffentlichungsnummer:
**WO 98/45302 (15.10.1998 Gazette 1998/41)**

(54) **SILYLALKYLBORANE, OLIGO ODER POLYBOROCARBOSILAZANE, UND SILICIUM CARBONITRIDKERAMIKEN**

SILILALKYLBORANES, OLIGO OR POLYBOROCARBOSILAZANES AND SILICON CARBONITRIDES CERAMICS

SILYLALKYLBORANES, OLIGO- OU POLYBOROCARBOSILAZANES ET CERAMIQUES A CARBONITRURE DE SILICIUM

(84) Benannte Vertragsstaaten:
**DE FR GB IT SE**

(30) Priorität: **03.04.1997 DE 19713766**

(43) Veröffentlichungstag der Anmeldung:
**26.01.2000 Patentblatt 2000/04**

(73) Patentinhaber: **Bayer Aktiengesellschaft
51368 Leverkusen (DE)**

(72) Erfinder:
- **JANSEN, Martin
D-53127 Bonn (DE)**
- **JÜNGERMANN, Hardy
D-59457 Werl (DE)**

(56) Entgegenhaltungen:
**DE-A- 4 320 785**
**US-A- 4 535 007**
**US-A- 5 233 066**

- **CHEMICAL ABSTRACTS, vol. 69, no. 5, 29.Juli 1968 Columbus, Ohio, US; abstract no. 19240, COYLE, T. D. ET AL: "Reactions of diborontetrahalides with some unsaturated organometallic compounds" XP002070230 & J. ORGANOMETAL. CHEM. (1968), 12(2), 269-80 CODEN: JORCAI, 1968,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die vorliegende Erfindung betrifft molekulare Silylalkylborane, ein Verfahren zu deren Herstellung, Oligo- oder Polyborocarbosilazane, ein Verfahren zu deren Herstellung und deren Verwendung sowie Siliciumcarbonitridkeramiken und ein Verfahren zu deren Herstellung.

Das Verfahren zur Erzeugung multinärer, nichtoxidischer Keramiken über molekulare Einkomponentenvorläufer hat eine herausragende Bedeutung erlangt. Es ermöglicht den Zugang zu nitridischen, carbidischen und carbonitridischen Stoffsystemen, die über herkömmliche Festkörperreaktionen nicht zugänglich sind. Die Produkte zeichnen sich durch hohe Reinheit, homogene Elementverteilung und gleichmäßige Partikelgröße aus.

Werkstoffe, die aus Si, B und N und gegebenenfalls auch C bestehen, zeigen besondere Eigenschaften hinsichtlich der thermischen Stabilität und der Oxidationsbeständigkeit. Sie können als Bulkmaterial aber auch für Beschichtungen und als Fasermaterial verwendet werden. Die borhaltigen Materialien zeigen eine erhöhte Kristallisationshemmung, während die kohlenstoffhaltigen darüber hinaus höhere Zersetzungstemperaturen als kohlenstofffreie Keramiken aufweisen.

Gemäß US-A 5 233 066 gelingt die Synthese der amorphen Keramiken $Si_3B_3N_7$ und $SiBN_3C$ aus dem Precursor Trichlorsilyl-amino-dichlorboran (TADB) durch Vernetzung mit Ammoniak oder Aminen und anschließender Pyrolyse im Gasstrom.

Bei dieser Methode ist die Zusammensetzung der Produkte zum einen durch den Einkomponentenvorläufer und zum anderen durch die Art der Vernetzung vorgegeben. Während das Si:B-Verhältnis durch den Precursor auf 1:1 festgelegt ist, ist das N:C-Verhältnis durch die Wahl von Methylamin als vernetzendem Reagenz abhängig.

Der Kohlenstoff wird dabei in die Keramik über die organische Seitenkette des Amins eingebaut. Dies geschieht jedoch unkontrolliert durch eine nicht näher geklärte Reaktion. Der Nachteil dieser Verfahrensweise liegt in der geringen Variationsmöglichkeit des C-Anteils. Eine Verlängerung der Seitenkette führt nicht zwangsläufig zu einem höheren C-Anteil in der Keramik, sondern zu Graphitausscheidungen im Material. Dies beeinflußt die Eigenschaften nachteilig. Zudem geht ein großer Teil des Kohlenstoffs bei der Pyrolyse verloren, da die Seitenketten in Form von flüchtigen Alkanen, Alkenen usw. abgespalten werden.

Gemäß Appl. Organomet. Chem. 10 (1996) 241-256 werden polymere borhaltige Carbosilane erhalten, indem man vinylgruppenhaltige Polysilane bzw. Polysilazane mit Boranaddukten der Formel $BH_3 \cdot SR_2$ mit R = $C_1$-$C_{18}$-Alkyl umsetzt.

Gemäß DE-A 43 20 785 werden Trissilylalkylborane der Formel $B[-C_2H_4-SiCl_2X]_3$ erhalten, indem man Vinylsilane der Formel $CH_2=CH-SiCl_2X$ mit $BH_3 \cdot THF$ umsetzt.

Bei diesen Methoden werden entweder direkt Polymere erhalten oder das Verhältnis von Si zu B entspricht nicht dem idealen Verhältnis von 1:1.

Aufgabe der vorliegenden Erfindung war daher die Bereitstellung von neuartigen, einfach herstellbaren Precursoren, die über eine Möglichkeit zur kontrollierten Einführung von Kohlenstoff verfügen, ohne dabei die Nachteile des Standes der Technik aufzuweisen.

Überraschenderweise konnte die Aufgabe mit Verbindungen des Typs

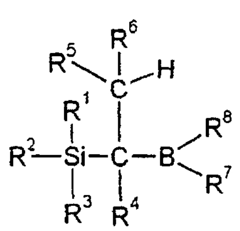

gelöst werden,
in denen jedes Si- mit 3 und jedes B-Atom mit 2 Resten R koordiniert ist und Silicium und Bor durch eine $C(CR^5R^6H)(R^4)$-Brücke verknüpft sind, wobei $R^1$ - $R^3$ unabhängig voneinander $C_1$-$C_6$-Alkyl, Vinyl, Phenyl, Wasserstoff oder Halogen sind, $R^4$ bis $R^6$ = $C_1$-$C_6$-Alkyl-, Vinyl-, Phenylgruppen und/oder Wasserstoff und $R^7$ und $R^8$ Chloridund/oder Bromidgruppen sind.

Durch diese Verbindungen, die Kohlenstoff bereits im Grundgerüst eingebaut haben, wird der Einbau in die Keramik begünstigt und die Abspaltung flüchtiger, kohlenstoffhaltiger Verbindungen reduziert.

Gegenstand der Erfindung sind daher molekulare Silylalkylborane der allgemeinen Strukturformel

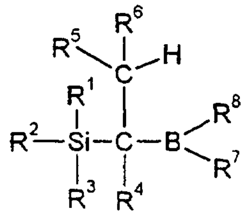

,

wobei jedes Si- mit 3 und jedes B-Atom mit 2 Resten R koordiniert ist und Silicium und Bor durch eine $C(CR^5R^6H)(R^4)$ -Brücke verknüpft sind, wobei $R^1$ - $R^3$ unabhängig voneinander $C_1$-$C_6$-Alkyl, Vinyl, Phenyl, Wasserstoff oder Halogen sind, $R^4$ bis $R^6$ = $C_1$-$C_6$-Alkyl-, Vinyl-, Phenylgruppen und/oder Wasserstoff und $R^7$ und $R^8$ Chloridund/oder Bromidgruppen sind.

In einer bevorzugten Ausführungsform der Erfindung ist in den molekularen Silylalkylboranen
$R^1$ bis $R^3$ = Cl und/oder $CH_3$,
$R^4$ =H,
$R^5$ = $CH_3$ und
$R^7$ und $R^8$=Cl.

Gegenstand der Erfindung ist zudem ein Verfahren zur Herstellung der erfindungsgemäßen molekularen Silylalkylborane, wonach Halogenvinylsilane der Formel

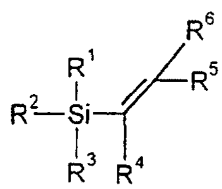

,

mit $R^1$ bis $R^3$ = H, Halogen, $C_1$-$C_6$-Alkyl, Vinyl oder Phenyl und $R^4$ bis $R^6$ = H, $C_1$-$C_6$-Alkyl, Vinyl oder Phenyl
mit Dihalogenboranen, in denen Halogen = Cl und/oder Brom ist,
bei Temperaturen zwischen -80 und 200°C umgesetzt werden und die Reaktionsmischung anschließend bei einem Druck zwischen 1 mbar und 20 mbar fraktionierend destilliert wird.

Dihalogenborane sind dabei vorzugsweise $BBr_2H$ oder $BCl_2H$.

In einer bevorzugten Ausführungsform des erfindungsgemäßen Verfahrens werden die Dihalogenborane entweder in situ aus Silanen der Formel $R^1_xR^2_ySiH_{4-x-y}$ mit x+y<4,$R^1$=$C_1$-$C_6$-Alkyl oder Phenyl und $R^2$=Halogen und Bortrihalogeniden erzeugt.

Die beim erfindungsgemäßen Verfahren eingesetzten Halogenborane $HBX_2$ mit X=Cl, Br können in einer weiteren Ausführungsform auch aus Alkyldihalogenboranen der Formel $RBX_2$ mit X=Cl, Br und R=$C_2$ - $C_6$-Alkyl durch Elimination von Alkenen in situ erzeugt werden.

Die in-situ-Herstellung hat den Vorteil, daß keine Zwischenprodukte isoliert werden müssen, sondern sämtliche Edukte in derselben Vorlage zu Reaktion gebracht werden können.

Zudem birgt die in situ-Erzeugung der Dihalogenborane den Vorteil, daß Nebenprodukte wie Diboran nicht oder nur in Spuren entstehen.

In einer bevorzugten Ausführungsform wird die Reaktion bei Temperaturen zwischen -80°C und 200°C entweder in Substanz oder in einem aprotischen, organischen Lösemittel, das ein $C_5$-$C_8$-Alkan, ein acyclischer oder cyclischer Ether oder ein Alkylaromat sein kann, durchgeführt.

Dabei sind bei dem Verfahren ohne Lösemittel Temperaturen bis 50°C und bei dem Verfahren mit Lösemittel Temperaturen bis 200°C bevorzugt.

Zur Herstellung der reinen Substanzen werden die Nebenprodukte und das gegebenenfalls vorhandene Lösemittel entfernt und das Produkt bei einem Druck zwischen 1 und 20 mbar fraktioniert. Es können jedoch auch andere gebräuchliche Reinigungsverfahren, wie z.B. Ausfrieren, verwendet werden.

Die als Ausgangsprodukte eingesetzten Vinylsilane sind kommerziell erhältlich. Das intermediär erzeugte Dichlorboran oder Dibromboran kann gemäß J. Org. Chem. 55 (1990) 2274-2275 oder Organometallics 14 (1995) 4157-4166 aus Alkyl- oder Phenylsilanen durch Reaktion mit Bortrichlorid hergestellt werden. Nach den dort genannten Vorschriften ist auch BClBrH herstellbar.

Dichlorboran oder Dibromboran kann ebenfalls durch Umsetzung von Alkylhalogensilanen mit Bortrihalogeniden erzeugt werden. Besonders bietet sich dabei die Umsetzung von Chlordimethylsilan mit Bortrichlorid an.

Gegenstand der Erfindung sind zudem Oligo- oder Polyborocarbosilazane aus den erfindungsgemäßen molekularen Silylalkylboranen, dadurch gekennzeichnet, daß in erster Koordinationssphäre jedes Siliciumatom mindestens ein Kohlenstoffatom aufweist und dieses an ein Boratom gebunden ist, wobei dieses Boratom zusätzlich noch an 2 Stickstoffatome gebunden ist.

Gegenstand der Erfindung ist zudem ein Verfahren zur Herstellung der erfindungsgemäßen polymeren Oligo- oder Polyborocarbosilazane, wonach mindestens ein erfindungsgemäßes molekulares Silylalkylboran mit mindestens 10 Mol Ammoniak und/oder einem Organylamin der Formel $H_2NR$ mit R= H, $C_1$-$C_6$-Alkyl, Vinyl oder Phenyl pro Mol Silylalkylboran in einem Lösemittel bei Temperaturen von -80 bis 300°C umgesetzt wird.

Die Oligo- oder Polycarbosilazane fallen in Form von Duromeren oder löslichen Thermoplasten an, die direkt in Lösung oder als Schmelze verschiedenen Formgebungsprozessen unterzogen werden können, z.B. Formgießen, Verspinnen zu Fasern, Ziehen von Folien, Herstellung von Beschichtungen durch verschiedene Beschichtungsverfahren wie Tauch- (Dip-Coating) oder Fliehkraftbeschichtungen (Spin-Coating), bevor diese beispielsweise zu Siliciumcarbonitridkeramiken umgesetzt werden.

Gegenstand der Erfindung sind zudem Siliciumborcarbonitridkerarniken aus den erfindungsgemäßen Oligo- oder Polyborocarbosilazanen enthaltend N-Si-C-B-N-Bindungen.

Gegenstand der Erfindung ist zudem ein Verfahren zur Herstellung von erfindungsgemäßen Siliciumborcarbonitridkeramiken, wonach mindestens eine der erfindungsgemäßen Oligo- oder Polyborocarbosilazane in Ammoniak- oder Inertgasatmosphäre bei Temperaturen zwischen -200 und 2 000°C, vorzugsweise 400 und 2 000°C, pyrolysiert und anschließend in Ammoniak- oder Inertgasatmosphäre bei Temperaturen zwischen 800 und 2 000°C calciniert wird.

In einer bevorzugten Ausführungsform des erfindungsgemäßen Verfahrens werden die Oligo- oder Polyborocarbosilazane auf Temperaturen zwischen 100 und 600°C aufgeheizt und mehrere Stunden getempert. Anschließend werden diese vorzugsweise zur Entfernung von Wasserstoff bei Temperaturen zwischen 1 200 und 1 500°C in Stickstoff- oder Argonatmosphäre calciniert.

Gegenstand der Erfindung ist zudem die Verwendung der erfindungsgemäßen Oligooder Polyborocarbosilazane zur Herstellung von keramischen Pulvern, keramischen Beschichtungen und keramischen Formkörpern, Folien, Fasern oder Beschichtungen.

Im folgenden ist die Erfindung beispielhaft erläutert, ohne daß hierin eine Einschränkung zu sehen ist.

**Ausführungsbeispiele:**

**Beispiel 1**

**Darstellung von 1,1-(Trichlorsilyl)(dichlorboryl)ethan**

Reaktionsgleichung:

$$Cl_3Si\text{-}CH{=}CH_2 + Et_3SiH + BCl_3 \rightarrow Cl_3Si\text{-}CH(CH_3)\text{-}BCl_2 + Et_3SiCl$$

Versuchsdurchführung:

| | |
|---|---|
| Triethylsilan | 93,2 mmol ≙ 10,84g |
| Bortrichlorid | 93,2 mmol ≙ 10,95 g |
| Trichlorvinylsilan | 93,2 mmol ≙ 15,1 g |

10,95 g Bortrichlorid wurden in einen 100 ml-Dreihalskolben einkondensiert, der mit Tropftrichter und Druckausgleich versehen wurde. Die Vorlage wurde dabei auf -65°C gekühlt. Innerhalb von 15 min tropfte man eine Mischung aus 10,84 g Triethylsilan und 15,1 g Trichlorvinylsilan zu. Dann ließ man die Reaktionsmischung auf Raumtemperatur erwärmen und zog flüchtige Nebenprodukte bei 20 mbar in eine Kühlfalle ab. Anschließend wurde fraktionierend destilliert. Man erhielt das Produkt zusammen mit Triethylchlorsilan in einer Fraktion.
$^{11}B$-NMR-Spektrum: $\delta$=66,9 ppm ($BCl_2$)

$^{13}C$-NMR-Spektrum: δ=11,21 ppm ($CH_3$), δ=34,1 ppm (CH)
$^{1}H$-NMR-Spektrum: δ=1,43 ppm ($CH_3$), δ=2,19 ppm(CH)
$^{29}Si$-NMR-Spekrum: δ=13,23 ppm

**Beispiel 2**

**Darstellung von 1,1-(Dichlormethylsilyl)(dichlorboryl)ethan**

Reaktionsgleichung:

$$Cl_2(CH_3)Si\text{-}CH{=}CH_2 + Et_3SiH + BCl_3 \rightarrow Cl_2(CH_3)Si\text{-}CH(CH_3)\text{-}BCl_2 + Et_3SiCl$$

Versuchsdurchführung:

| | |
|---|---|
| Triethylsilan | 93,2 mmol ≙ 10,84 g |
| Bortrichlorid | 93,2 mmol ≙ 10,95 g |
| Dichlormethylvinylsilan | 93,2 mmol ≙ 13,2 g |

10,95 g Bortrichlorid wurden in einen 100 ml-Dreihalskolben einkondensiert, der mit Tropftrichter und Druckausgleich versehen war. Die Vorlage wurde dabei auf -65°C gekühlt. Innerhalb von 15 min tropfte man eine Mischung aus 10,84 g Triethylsilan und 13,2 g Dichlormethylvinylsilan zu. Dann ließ man die Reaktionsmischung auf Raumtemperatur erwärmen und zog flüchtige Nebenprodukte bei 20 mbar in eine Kühlfalle ab. Anschließend wurde fraktionierend destilliert. Man erhielt das Produkt zusammen mit Triethylchlorsilan in einer Fraktion.

$^{1}H$-NMR-Spektrum: δ=1,40 ppm (d) ($CH_3$), δ=0,88 ppm (s) ($SiCH_3$), δ=1,99 ppm (q) (CH)
$^{13}C$-NMR-Spektrum: δ=5,63 ppm ($SiCH_3$), δ=11,56 ppm ($CH_3$), δ=31,01 ppm (CH)
$^{29}Si$-NMR-Spekrum: δ=26,78 ppm
$^{11}B$-NMR-Spektrum: δ=67,66 ppm

**Beispiel 3**

**Darstellung von 1,1-(Chlordimethylsilyl)(dichlorboryl)ethan**

Reaktionsgleichung:

$$Cl(CH_3)_2Si\text{-}CH{=}CH_2 + Et_3SiH + BCl_3 \rightarrow Cl(CH_3)_2Si\text{-}CH(CH_3)\text{-}BCl_2 + Et_3SiCl$$

Versuchsdurchführung:

| | |
|---|---|
| Triethylsilan | 93,2 mmol ≙ 10,84g |
| Bortrichlorid | 93,2 mmol ≙ 10,95 g |
| Chlordimethylvinylsilan | 93,2 mmol ≙ 11,2 g |

10,95 g Bortrichlorid wurden in einen 100 ml-Dreihalskolben einkondensiert, der mit Tropftrichter und Druckausgleich versehen war. Die Vorlage wurde dabei auf -65°C gekühlt. Innerhalb von 15 min tropfte man eine Mischung aus 10,84 g Triethylsilan und 11,2 g Chlordimethylvinylsilan zu. Dann ließ man die Reaktionsmischung auf Raumtemperatur erwärmen und zog flüchtige Nebenprodukte bei 20 mbar in eine Kühlfalle ab. Anschließend wurde fraktionierend

destilliert. Man erhielt das Produkt zusammen mit Triethylchlorsilan in einer Fraktion.

| | |
|---|---|
| $^1$H-NMR-Spektrum: | $\delta$=1,31 ppm (d) ($CH_3$), $\delta$=1,78 ppm (q) (CH), $\delta$=0,52 ppm (s) ($Si(CH_3)_2$) |
| $^{13}$C-NMR-Spektrum: | $\delta$=1,87 ppm ($Si(CH_3)_2$), $\delta$=11,61 ppm ($CH_3$),<br>$\delta$=30,02 ppm (CH)<br>$\delta$=2,05 ppm ($Si(CH_3)_2$) |
| $^{29}$Si-NMR-Spekrum: | $\delta$=28,40 ppm |
| $^{11}$B-NMR-Spektrum: | $\delta$=67,90 ppm |

**Beispiel 4**

**Darstellung von 1,1-(Trichlorsilyl)(dichlorboryl)ethan**

Reaktionsgleichung:

$$Cl_3Si\text{-}CH{=}CH_2 + Me_2ClSiH + BCl_3 \rightarrow Cl_3Si\text{-}CH(CH_3)\text{-}BCl_2 + Me_2SiCl_2$$

Versuchsdurchführung:

| | |
|---|---|
| Chlordimethylsilan | 0,2 mol = 19,7 g |
| Bortrichlorid | 0,24 mol = 20 ml |
| Trichlorvinylsilan | 0,2 mol = 33,3 g |

20 ml Bortrichlorid wurden in einen 250 ml-Dreihalskolben einkondensiert, der mit Tropftrichter und Druckausgleich versehen wurde. Die Vorlage wurde dabei auf -65°C gekühlt. Innerhalb von 40 min tropfte man eine Mischung aus 19,7 g Chlordimethylsilan (98%ig) und 33,3 g Trichlorvinylsilan (97%ig) zu. Dann ließ man die Reaktionsmischung auf Raumtemperatur erwärmen und zog flüchtige Nebenprodukte bei 20 mbar in einer Kühlfalle ab. Anschließend wurde fraktionierend destilliert. Man erhielt das Produkt bei 47 bis 49°C und 10mbar in großer Reinheit. Die Ausbeute betrug 62,1 %.
$^{11}$B-NMR-Spektrum: $\delta$=66,9 ppm ($BCl_2$)
$^{13}$C-NMR-Spektrum: $\delta$=11,21 ppm ($CH_3$), $\delta$=34,1 ppm (CH)
$^1$H-NMR-Spektrum: $\delta$=1,43 ppm ($CH_3$), $\delta$=2,19 ppm (CH)
$^{29}$Si-NMR-Spekrum: $\delta$=13,23 ppm

**Patentansprüche**

1. Molekulare Silylalkylborane der allgemeinen Strukturformel

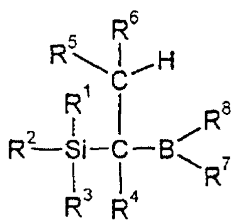

wobei jedes Si- mit 3 und jedes B-Atom mit 2 Resten R koordiniert ist und Silicium und Bor durch eine $C(CR^5R^6H)(R^4)$-Brücke verknüpft sind, wobei $R^1$ bis $R^3$ unabhängig voneinander $C_1$-$C_6$-Alkyl, Vinyl, Phenyl, Wasserstoff oder Halogen sind, $R^4$ bis $R^6$ = $C_1$-$C_6$-Alkyl-, Vinyl-, Phenylgruppen und/oder Wasserstoff und $R^7$ und $R^8$ Chlorid- und/

oder Bromidgruppen sind.

**2.** Molekulare Silylalkylborane nach Anspruch 1, **dadurch gekennzeichnet, daß** $R^1$ - $R^3$ = Cl und/oder $CH_3$, $R^4$ =H, $R^5$ = $CH_3$ und $R^7$ und $R^8$ = Cl sind.

**3.** Verfahren zur Herstellung der molekularen Silylalkylborane nach Anspruch 1 oder 2, **dadurch gekennzeichnet, daß** Halogenvinylsilane der Formel

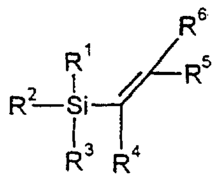

,

in denen $R^1$ bis $R^3$ = H, Halogen, $C_1$-$C_6$-Alkyl, Vinyl oder Phenyl und $R^4$ bis $R^6$ = H, $C_1$-$C_6$-Alkyl, Vinyl oder Phenyl sind, mit Dihalogenboranen, in denen Halogen = Cl und/oder Brom ist, bei Temperaturen zwischen -80 und 200°C umgesetzt werden und die Reaktionsmischung anschließend bei einem Druck zwischen 1 mbar und 20 mbar fraktioniert destilliert wird.

**4.** Verfahren zur Herstellung der molekularen Silylalkylborane nach Anspruch 3, **dadurch gekennzeichnet, daß** die Dihalogenborane in situ aus Silanen der Formel $R^1_xR^2_ySiH_{4-x-y}$ mit x+y<4,$R^1$=$C_1$-$C_6$-Alkyl oder Phenyl und $R^2$=Halogen und Bortrihalogeniden erzeugt werden.

**5.** Oligo- oder Polyborocarbosilazane aus molekularen Silylalkylboranen nach einem der Ansprüche 1 oder 2, **dadurch gekennzeichnet, daß** in erster Koordinationssphäre jedes Siliciumatom mindestens ein Kohlenstoffatom aufweist und dieses an ein Boratom gebunden ist, wobei dieses Boratom zusätzlich noch an 2 Stickstoffatome gebunden ist.

**6.** Verfahren zur Herstellung polymerer Oligo- oder Polyborocarbosilazane nach Anspruch 5, **dadurch gekennzeichnet, daß** mindestens ein molekulares Silylalkylboran nach Anspruch 1 oder 2 mit mindestens 10 Mol Ammoniak und/oder einem Organylamin der Formel $H_2NR$ mit R= H, $C_1$-$C_6$-Alkyl, Vinyl oder Phenyl pro Mol Silylalkylboran in einem Lösemittel bei Temperaturen von -80 bis 300°C umgesetzt wird.

**7.** Siliciumborcarbonitridkeramiken aus Oligo- oder Polyborocarbosilazanen nach Anspruch 5 enthaltend N-Si-C-B-N-Bindungen.

**8.** Verfahren zur Herstellung von Siliciumborcarbonitridkeramiken, **dadurch gekennzeichnet, daß** mindestens ein Oligo- oder Polyborocarbosilazan nach Anspruch 5 in Ammoniak- oder Inertgasatmosphäre bei Temperaturen zwischen -200 und 2 000°C pyrolysiert und anschließend in Ammoniak- oder Inertgasatmosphäre bei Temperaturen zwischen 800 und 2 000°C calciniert wird.

**9.** Verwendung der Oligo- oder Polyborocarbosilazane nach Anspruch 5 zur Herstellung von keramischen Pulvern, keramischen Beschichtungen und keramischen Formkörpern, Folien, Fasern oder Beschichtungen.

## Claims

**1.** Molecular silylalkylboranes of the general structural formula

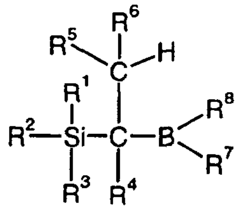

,

where each Si atom is coordinated to 3 radicals R and each B atom is coordinated to 2 radicals R and silicon and boron are linked by a $C(CR^5R^6H)(R^4)$ bridge, where $R^1$ to $R^3$ independently of one another are $C_1$-$C_6$-alkyl, vinyl, phenyl, hydrogen or halogen, $R^4$ to $R^6$ = $C_1$-$C_6$-alkyl, vinyl or phenyl groups and/or hydrogen and $R^7$ and $R^8$ are chloride and/or bromide.

**2.** Molecular silylalkylboranes according to Claim 1, **characterized in that**
$R^1$ - $R^3$ = Cl and/or $CH_3$,
$R^4$ = H, $R^5$ = $CH_3$ and
$R^7$ and $R^8$ = C1.

**3.** Process for preparing the molecular silylalkylboranes according to Claim 1 or 2, **characterized in that** halogenovinylsilanes of the formula

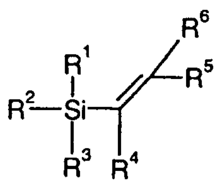

,

where $R^1$ to $R^3$ = H, halogen, $C_1$-$C_6$-alkyl, vinyl or phenyl and $R^4$ to $R^6$ = H, $C_1$-$C_6$-alkyl, vinyl or phenyl, are reacted with dihalogenoboranes where halogen = Cl and/or bromine, at temperatures between -80 and 200°C, and the reaction mixture is then subjected to fractional distillation at a pressure between 1 mbar and 20 mbar.

**4.** Process for preparing the molecular silylalkylboranes according to Claim 3, **characterized in that** the dihalogenoboranes are produced in situ from silanes of the formula $R^1_xR^2_ySiH_{4-x-y}$, where x+y<4, $R^1$ = $C_1$-$C_6$-alkyl or phenyl and $R^2$ = halogen, and boron trihalides.

**5.** Oligo- or polyborocarbosilazanes made from molecular silylalkylboranes according to one of Claims 1 or 2, **characterized in that** each silicon atom has at least one carbon atom in the first coordination sphere and that this carbon atom is bound to a boron atom, each boron atom in addition being further bound to 2 nitrogen atoms.

**6.** Process for preparing polymeric oligo- or polyborocarbosilazanes according to Claim 5, **characterized in that** at least one molecular silylalkylborane according to Claim 1 or 2 is reacted with at least 10 mol of ammonia and/or an organylamine of the formula $H_2NR$, where R = H, $C_1$-$C_6$-alkyl, vinyl or phenyl, per mole of silylalkylborane in a solvent at temperatures of -80 to 300°C.

**7.** Silicon borocarbonitride ceramics made from oligo- or polyborocarbosilazanes according to Claim 5 comprising N-Si-C-B-N bonds.

**8.** Process for preparing silicon borocarbonitride ceramics, **characterized in that** at least one oligo- or polyborocarbosilazane according to Claim 5 is pyrolysed in an ammonia or inert gas atmosphere at temperatures between -200 and 2000°C and is then calcined in an ammonia or inert gas atmosphere at temperatures between 800 and 2000°C.

9. Use of the oligo- or polyborocarbosilazanes according to Claim 5 for preparing ceramic powders, ceramic coatings and ceramic shaped bodies, films, fibres or coatings.

## Revendications

1. Silylalkylboranes moléculaires répondant à la formule générale de structure

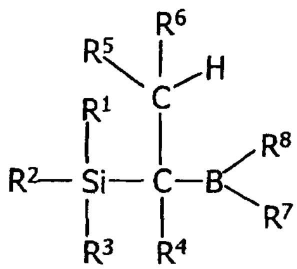

dans laquelle chaque atome de Si est cordonné avec 3 substituants R et chaque atome de B avec 2 substituants R, et le silicium et le bore sont reliés par un pont $C(CR^5R^6H)(R^4)$, $R^1$ à $R^3$ représentant chacun, indépendamment les uns des autres, un groupe alkyle en $C_1$-$C_6$, vinyle, phényle, l'hydrogène ou un halogène, $R^4$ à $R^6$ représentent des groupes alkyle en $C_1$-$C_6$, vinyle, phényle et/ou l'hydrogène et $R^7$ et $R^8$ des groupes chlorure et/ou bromure.

2. Silylalkylboranes moléculaires selon revendication 1, **caractérisés en ce que**,
$R^1$ à $R^3$ = Cl et/ou $CH_3$,
$R^4$ = H, $R^5$ = $CH_3$ et,
$R^7$ et $R^8$ = Cl.

3. Procédé pour la préparation des sylalkylboranes moléculaires selon la revendication 1 ou 2, **caractérisé en ce que** l'on fait réagir des halogénovinylsilanes de formule

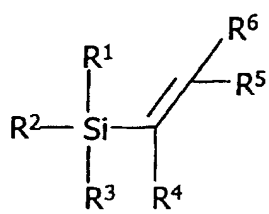

dans laquelle $R^1$ à $R^3$ = H, halogène, alkyle en $C_1$-$C_6$, vinyle ou phényle et
$R^4$ à $R^6$ = H, alkyle en $C_1$-$C_6$, vinyle ou phényle,
Le A 32 374 (98 917 047.7) avec des dihalogénoboranes dont les halogènes consistent en Cl et/ou Br, à des températures allant de -80 à +200°C et on soumet ensuite le mélange de réaction à distillation fractionnée sous une pression allant de 1 mbar à 20 mbar.

4. Procédé pour la préparation des silylalkylboranes moléculaires selon la revendication 3, **caractérisé en ce que** l'on forme les dihalogénoboranes in situ à partir de sIlanes de formule $R^1_xR^2_ySiH_{4-x-y}$ dans laquelle x + y < 4, $R^1$ = alkyle en $C_1$-$C_6$ ou phényle et $R^2$ = halogène, et de trihalogénures de bore.

5. Oligo- ou poly-borocarbosilazanes formés à partir des silylalkylboranes moléculaires selon l'une des revendications 1 ou 2, **caractérisés en ce que**, dans une première sphère de coordination, chaque atome de silicium porte au moins un atome de carbone, lequel est relié à un atome de bore, ce dernier étant encore relié à 2 atomes d'azote.

6. Procédé pour la préparation des oligo- ou polyborocarbosilazanes polymères selon revendication 5, **caractérisé en ce que** l'on fait réagir au moins un silylalkylborane moléculaire selon la revendication 1 ou 2 avec au moins 10 mol d'ammoniac et/ou d'une amine organique de formule $H_2NR$ dans laquelle R= H, alkyle en $C_1$-$C_6$, vinyle ou

phényle, par mole du silylalkylborane, dans un solvant, à des températures allant de -80 à +300°C.

**7.** Céramiques de borocarbonitrures de silicium formées à partir des oligo- ou poly-borocarbosilazanes selon la revendication 5, contenant des liaisons N-Si-C-B-N.

**8.** Procédé pour la préparation de céramiques de borocarbonitrures de silicium, **caractérisé en ce que** l'on pyrolyse au moins un oligo- ou poly-borocarbosilazane selon la revendication 5 en atmosphère d'ammoniac ou de gaz inerte à des températures allant de -200 à +2 000°C puis on calcine à des températures de 800 à 2000°C en atmosphère d'ammoniac ou de gaz inerte.

**9.** Utilisation des oligo- ou poly-borocarbosilazanes selon la revendication 5 pour la fabrication de poudres céramiques, l'application de revêtements céramiques et la fabrication de corps moulés, feuilles, fibres ou revêtements céramiques.